# EUROPÄISCHE PATENTANMELDUNG

(11) **EP 4 148 376 A1**
(43) Veröffentlichungstag der Anmeldung: **15.03.2023**
(21) Anmeldenummer: 21195744.4
(22) Anmeldetag: 09.09.2021
(51) Int. Cl.: G01B 21/14

(54) **VERFAHREN ZUM ABBILDEN EINES MESSOBJEKTS MIT EINER KAMERA MITTELS DIFFERENZIALINTERFERENZKONTRASTMIKROSKOPIE**

(71) Anmelder: Siemens Healthcare Diagnostics Inc., Tarrytown, NY 10591 (US)
(72) Erfinder: Kraus, Martin, Dr., 90765 Fürth (DE); Engel, Thomas, Dr., 73432 Aalen (DE); Seliger, Ramona, 91346 Wiesenttal-Muggendorf (DE)
(74) Vertreter: Maier, Daniel Oliver

(57) **Zusammenfassung**

Die Erfindung betrifft ein Verfahren zum Abbilden eines Messobjekts mit einer Kamera in einem Objektbereich eines Mikroskops mittels Differenzialinterferenzkontrast. Das Mikroskop umfasst eine Beleuchtungsvorrichtung zur Beleuchtung des Messobjektes, polarisationsoptische Komponenten zur Realisierung des Differenzialinterferenzkontrasts und die Kamera zur Abbildung eines Bildes des Messobjektes in Differenzialinterferenzkontrast. Die polarisationsoptischen Komponenten sind in der Grundeinstellung eines Stellwinkels so eingestellt, dass die Bildhelligkeit in einem Bereich des Objektbereichs, in dem sich kein Messobjekt befindet, mindesten 20 % und höchstens 80 % der maximalen Bildhelligkeit eines Messobjektes im Objektbereich beträgt, die durch Verstellung des Stellwinkels der polarisationsoptischen Komponenten erzielt werden kann.

## Beschreibung

Die Erfindung liegt auf dem Gebiet der automatisierten Abbildung eines Messobjekts mit einer Kamera in einem Objektbereich eines Mikroskops mittels Differenzialinterferenzkontrast (DIC).

Bei der Mikroskopie wird üblicherweise im technischen Kontrast des DICs die Grundeinstellung so vorgenommen, dass ein Polarisator und ein Analysator fast genau gekreuzt sind und so in Bildbereichen ohne Objekt es im Wesentlichen zu Auslöschung kommt und das Bild dunkel ist.

Dies beruht darauf, dass bei der Beobachtung mit dem Auge das Auge bei geringen Intensitätswerten besonders empfindlich ist und so bereits geringe Objektstrukturen und vergleichsweise geringe Objektkontraste besonders gut erkannt werden können.

An Objekten wird in Richtung der Aufspaltung des DIC Strahlenganges ein Gangunterschied zwischen den parallel verlaufenden Strahlen erzeugt. Nach Wiedervereinigung durch Überlagerung und Filterung mit dem Analysator über Interferenz wird aufgrund der entstandenen Phasenverzögerung eine höhere Intensität transmittiert. So werden Phasenobjekte über den entstehenden Intensitätskontrast für das Auge und auch für eine Kamera sichtbar.

Bisher erfolgt die Einstellung von DIC Mikroskopen bei der Benutzung mit Kamera entsprechend, da man mit der Kamera den gewohnten Seheindruck nachbilden wollte und will. Dabei werden bisher jedoch im Allgemeinen im Vergleich zum mit dem Auge erzielbaren Seheindrücken mit digitalen Kameras nur verringerte Abbildungsqualitäten erreicht.

Die der Erfindung zugrundeliegende Aufgabe ist somit das Bereitstellen eines Verfahrens zum Abbilden eines Messobjekts mit einer Kamera in einem Objektbereich eines Mikroskops mittels DIC, welches eine verbesserte Abbildungsqualität mittels einer Kamera ermöglicht.

Erfindungsgemäß soll für die Mikroskopie mit DIC als Bildgebungsmethode eine optimierte Einstellung angegeben werden, die für die messtechnische Auswertung von DIC-Bildern mit computerbasierten Methoden vorteilhaft ist. Kameras weisen eine lineare Empfindlichkeitskennlinie auf, so dass eine angepasste Intensitätseinstellung im Bild im Vergleich zur Beobachtung mit dem Auge wünschenswert und vorteilhaft ist, insbesondere mit höherem Signalpegel und linearem Intensitätsverlauf.

Der Erfindung liegt folglich die Erkenntnis zu Grunde, dass sich das menschliche Auge und eine Kamera in ihren Detektionseigenschaften nennenswert unterscheiden. Das Auge hat eine logarithmische Kennlinie und einen sehr großen Dynamikbereich von etwa 200 dB mit Schwarz/Weiß und Farbsehen. Kameras hingegen weisen eine lineare Empfindlichkeitskurve auf. Selbst Kameras mit sogenannten Lin/Log Empfindlichkeit weisen abschnittsweise aneinander anschließende, unterschiedlich steile lineare Kennlinienbereiche auf, die den logarithmischen Verlauf somit über die Näherung mit abschnittsweise linearen Teilbereichen nachbilden.

Die Erfindung geht weiter davon aus, dass Aufgrund der linearen Eigenschaften von Kamerasensoren in CCD- oder CMOS-Technologie es im Allgemeinen keine Rolle spielt, bei welchem Intensitätsniveau innerhalb des Linearitätsbereichs des Sensors das Messsignal bzw. die Kontrastierung des Objekts entsteht. Die relative Intensitätsverteilung durch die Kontrastierung bleibt prinzipiell erhalten und kann sogar im Allgemeinen optimiert werden.

Folglich kann der DIC Arbeitspunkt an Stellen geschoben werden, die Vorteile für die quantitative Messtechnik bieten, wie z.B. die Linearität im mittleren Intensitätsbereich des Signals, die zudem zu symmetrischen Intensitätsveränderungen bei positiven oder negativen Phasenänderung im Messobjekt führen. Aufgrund der durch den neuen Einstellpunkt neu geschaffenen Symmetrie ergeben sich geschlossene Pfad- bzw. Flächenintegrale. Der Zahlenwert des Integrals bzw. der Summe der Abweichungen der Intensitätswerte vom voreingestellten Wert für Bildbereiche ohne Objekt nimmt dann den Wert Null bzw. einen Wert nahe der Null an. Das bedeutet auch, dass im Falle von Messobjekten, die vollständig im Gesichtsfeld der Optik liegen oder für die über ein Stitching von Teilbildern ein vollständiges Gesamtbild erzeugt werden kann, ebenfalls diese Randbedingung für die Messwerte erreicht werden kann.

Diese Integrationsbedingung kann vorteilsweise auch zur Bewertung der Bildgüte bzw. der Systemeinstellung verwendet werden. Dabei können z.B. "Schließfehler" bzw. eine Abweichung vom idealen Wert Null, geteilt durch die Anzahl der Pixel im Bild oder der Pixel mit nicht Null-Information im Bild, als Kennwert für die Messgüte herangezogen werden.

Erfindungsgemäß hat also die Grundeinstellung von DIC Mikroskopen nicht mehr wie bisher eine Auslöschung der Intensität zum Ziel. So wird das Bild von Bereichen ohne Objekt also nicht wie üblich auf dunkel eingestellt und ggf. dann die Polarisationsoptik mit Analysator, Polarisator und/oder doppelbrechendem Prisma wieder leicht aus der Grundeinstellung weggestellt, um dem Beobachter oder einer Kamera mit etwas Licht dann eine Orientierung im Objektbereich zu ermöglichen. Die neue, erfindungsgemäße Einstellungsmethode nimmt stattdessen bevorzugt entweder in einem Bild oder über einen Scan mittels der polarisationsoptischen Komponenten zur DIC Einstellung, wie z.B. Analysator, Polarisator und/oder doppelbrechendem Prisma, Amplitudenwerte auf und stellt dann die Komponenten so ein, dass die Bildhelligkeit in Objektbereichen ohne Messobjekt zumindest näherungsweise dem halben Amplitudenwert zwischen maximaler und minimaler Intensität entspricht, d.h. näherungsweise einem mittleren Amplitudenwert entspricht. Vorteilshafterweise kann, wenn die Einstellung in einem Scan ermittelt wird, aus der Scankurve über die Stellwinkel der polarisationsoptischen Komponente und die Helligkeit eine Kalibrierung des Phasenwinkels vorgenommen werden. Diese Kalibrierung kann dann zur Skalierung der Messwerte der Helligkeitsabweichungen von der mittleren Intensität von Objektfreien Bildbereichen verwendet werden. Bei der Kalibrierung ist das spezifische Stellverhalten des Antriebs für die Bewegung der für die Einstellung genutzten polarisationsoptischen Komponente vorteilshafterweise funktional mit zu berücksichtigen.

Ein Gegenstand der Erfindung ist insbesondere ein Verfahren zum Abbilden eines Messobjekts mit einer Kamera in einem Objektbereich eines Mikroskops mittels Differenzialinterferenzkontrast, das Mikroskop umfassend eine Beleuchtungsvorrichtung zur Beleuchtung des Messobjektes, polarisationsoptische Komponenten zur Realisierung des Differenzialinterferenzkontrasts und die Kamera zur Abbildung eines Bildes des Messobjektes in Differenzialinterferenzkontrast, wobei die polarisationsoptischen Komponenten in der Grundeinstellung eines Stellwinkels so eingestellt sind, dass die Bildhelligkeit in einem Bereich des Objektbereichs, in dem sich kein Messobjekt befindet, mindesten 20 % und höchstens 80 % der maximalen Bildhelligkeit eines Messobjektes im Objektbereich beträgt, die durch Verstellung des Stellwinkels der polarisationsoptischen Komponenten erzielt werden kann.

Dies hat den Vorteil, dass eine verbesserte Abbildungsqualität und Messgüte mittels der Kamera ermöglicht wird.

Vorteilhafterweise handelt es sich bei der Kamera um eine CCD- oder CMOS-Kamera.

Vorteilhafterweise beträgt die Bildhelligkeit im Bereich des Objektbereichs, in dem sich kein Messobjekt befindet, mindesten 30 % und höchstens 70 % der maximalen Bildhelligkeit eines Messobjektes im Objektbereich.

Vorteilhafterweise beträgt die Bildhelligkeit im Bereich des Objektbereichs, in dem sich kein Messobjekt befindet, mindesten 40 % und höchstens 60 %, bevorzugt 50 % der maximalen Bildhelligkeit eines Messobjektes im Objektbereich.

Vorteilhafterweise umfassen die polarisationsoptischen Komponenten mindestens einen Polarisator, einen Polarisationsanalysator und/oder ein Wollaston-Prisma, bevorzugt zwei Wollaston-Prismen.

Vorteilhafterweise sind die chromatischen Effekte der polarisationsoptischen Komponenten für deren Stellwinkel in der Grundeinstellung für einen vorbestimmten Messwellenlängenbereich minimiert.

Vorteilhafterweise emittiert die Beleuchtungsvorrichtung Licht in einem vorbestimmten Messwellenlängenbereich, wobei der Messwellenlängenbereich bevorzugt die Wellenlängen 455 nm, 490 nm und/oder 680 nm umfasst.

Vorteilhafterweise bezieht sich die Bildhelligkeit im Bereich des Objektbereichs, in dem sich kein Messobjekt befindet, auf eine mittlere Wellenlänge des Messwellenlängenbereichs.

Vorteilhafterweise entspricht die mittlere Wellenlänge einem gewichteten Mittelwert von Wellenlängen des Messwellenlängenbereich, wobei bevorzugt Gewichtungen gewählt werden, die der Bedeutung der jeweiligen Messwellenläge für die vorzunehmende Abbildung entsprechen.

Vorteilhafterweise ist die Kamera als eine Schwarzweiß-Kamera und/oder eine Farbkamera ausgebildet.

Vorteilhafterweise ist eine Farbkamera im Bayer-Design oder als eine Mehrchip-Farbkamera ausgeführt, oder es sind anstelle einer Farbkamera getrennte Farbkameras für unterschiedliche Farbkanäle vorgesehen.

Vorteilhafterweise umfasst das Messobjekt eine biologische Zelle, bevorzugt eine Blutzelle, Urinsedimente und/oder ein medizinisches Präparat, wobei das Messobjekt bevorzugt vor Durchführung des Verfahrens einem Menschen oder einem Tier entnommen worden ist und/oder bereitgestellt worden ist.

Ein weiterer Gegenstand der Erfindung ist ein automatisches Analysegerät umfassend ein Mikroskop zum Abbilden eines Messobjekts mit einer Kamera in einem Objektbereich des Mikroskops mittels Differenzialinterferenzkontrast, das Mikroskop umfassend eine Beleuchtungsvorrichtung zur Beleuchtung des Messobjektes, polarisationsoptische Komponenten zur Realisierung des Differenzialinterferenzkontrasts und die Kamera zur Abbildung eines Bildes des Messobjektes in Differenzialinterferenzkontrast, das automatische Analysegerät weiter umfassend eine programmierbare Steuerungsvorrichtung, wobei die Steuerungsvorrichtung so konfiguriert ist, dass das automatische Analysegerät ein erfindungsgemäßes Verfahren ausführen kann.

Vorteilhafterweise umfasst das automatische Analysegerät einen automatischen Hämatologie-Analyzer oder ist als ein automatischer Hämatologie-Analyzer ausgestaltet.

Ein weiterer Gegenstand der Erfindung ist eine Verwendung eines erfindungsgemäßen Verfahrens in einem automatischem Analysegerät, bevorzugt in einem erfindungsgemäßen automatischen Analysegerät.

Die Erfindung wird anhand der beigefügten Zeichnung noch einmal durch konkrete Ausführungsbeispiele näher erläutert. Die gezeigten Beispiele stellen bevorzugte Ausführungsformen der Erfindung dar. Es zeigt:
- FIG 1: einen Verlauf der im DIC Betrieb auf den Detektor einfallenden Intensität (Hintergrund-Intensität B) in Abhängigkeit von der Einstellung der polarisationsoptischen Komponente (Slider-Position A) zur Einstellung des DIC Kontrastes bei 445 nm (blau) zentraler Messwellenlänge (C),
- FIG 2: einen Verlauf der im DIC Betrieb auf den Detektor einfallenden Intensität (Hintergrund-Intensität B) in Abhängigkeit von der Einstellung der polarisationsoptischen Komponente (Slider-Position A) zur Einstellung des DIC Kontrastes bei 490 nm (grün) zentraler Messwellenlänge (D),
- FIG 3: einen Verlauf der im DIC Betrieb auf den Detektor einfallenden Intensität (Hintergrund-Intensität B) in Abhängigkeit von der Einstellung der polarisationsoptischen Komponente (Slider-Position A) zur Einstellung des DIC Kontrastes bei 680 nm (rot) zentraler Messwellenlänge (E),
- FIG 4: die Verläufe der im DIC Betrieb auf den Detektor einfallenden Intensität (Hintergrund-Intensität B) in Abhängigkeit von der Einstellung der polarisationsoptischen Komponente (Slider-Position A) zur Einstellung des DIC Kontrastes der Figuren 1, 2 und 3 in einem Plot vereinigt,
- FIG 5: eine normierte Darstellung der Verläufe der im DIC Betrieb auf den Detektor einfallenden Intensität (Hintergrund-Intensität B) in Abhängigkeit von der Einstellung der polarisationsoptischen Komponente (Slider-Position A) zur Einstellung des DIC Kontrastes aus Figur 4 .

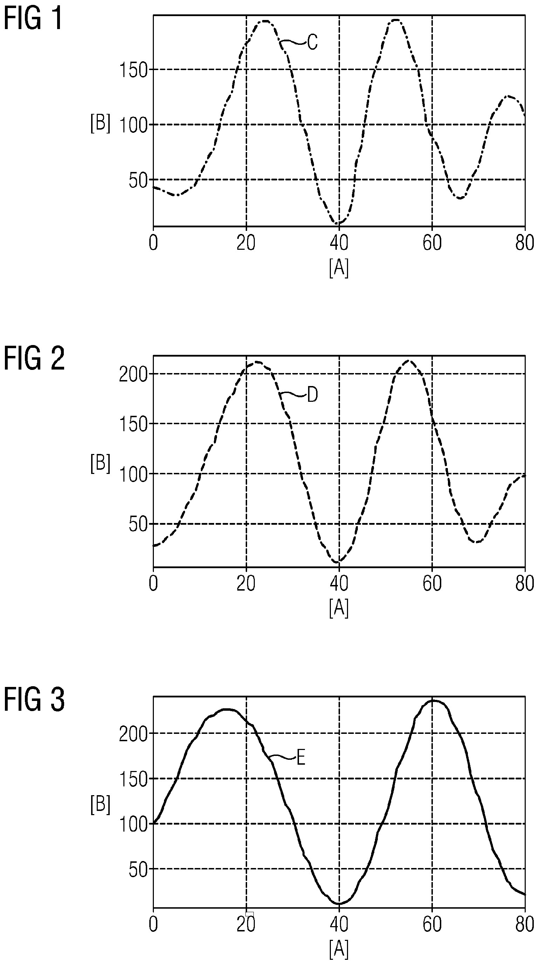

Der in FIG 1 gezeigte Verlauf der im DIC Betrieb auf den Detektor einfallenden Intensität in Abhängigkeit von der Einstellung der polarisationsoptischen Komponente zur Einstellung des DIC Kontrastes bei 445 nm (blau) zentraler Messwellenlänge (A) wurde mit einem Leica DMi 8 Mikroskop, Stellbereich +/- 20.000 Inkremente, Schrittweite pro Schritt 500 Inkremente, gemessen. Aufgetragen ist die Position des Sliders ("Slider-Position" A) in willkürlichen Einheiten auf der X-Achse gegen die Hintergrundintensität ("Hintergrund-Intensität" B) .

FIG 2 und FIG 3 zeigen entsprechende Verläufe wie in FIG 1 bei jeweils 490 nm (D)und 680 nm (E) zentraler Messwellenlänge.

Die Kurven zeigen das Minimum für die klassische Einstellung des DIC-Kontrasts ca. bei Schritt 40. Die Kurven verlaufen im Bereich um Schritt 40 sehr flach, mit wenig Steigung und somit praktisch asymptotisch zur x-Achse der Plots. Die leichten Asymmetrien von rechtem zu linkem Kurventeil sind vermutlich technisch bedingt und beruhen auf der Fertigungsgüte des gesamten optischen Systems. Im Bereich um die 100 bis 150 der mittleren Intensität (Mean) zeigen die Kurven die größte Steigung, da dies der mittlere Bereich zwischen den Min- und Max. Umkehrpunkten des sinusförmigen Verlaufs ist.

Der DIC Arbeitspunkt kann somit an Stellen geschoben werden, die Vorteile für die quantitative Messtechnik bieten, wie z.B. die Linearität im mittleren Intensitätsbereich des Signals. Dies führt vorteilshaferweise auch zu symmetrischen Intensitätsveränderungen bei positiven oder negativen Phasenänderung im Messobjekt. Diese neu geschaffene Symmetrie aufgrund des neuen Einstellpunktes erlaubt weiter geschlossene Pfad- bzw. Flächenintegrale, bei denen der Zahlenwert des Integrals bzw. die Summe der Abweichungen der Intensitätswerte vom voreingestellten Wert für Bildbereiche ohne Objekt dann den Wert Null bzw. einen Wert nahe der Null annimmt. Für Messobjekten, die vollständig im Gesichtsfeld der Optik liegen oder für die durch ein Stitching von Teilbildern ein vollständiges Gesamtbild erzeugt werden kann, kann ebenfalls diese Randbedingung für die Messwerte erreicht werden.

Diese Integrationsbedingung kann vorteilshafterweise auch zur Bewertung der Bildgüte bzw. der Systemeinstellung verwendet werden, indem z.B. "Schließfehler" bzw. die Abweichung vom idealen Wert Null, geteilt durch die Anzahl der Pixel im Bild oder der Pixel mit nicht Null-Information im Bild, als Kennwert für die Messgüte herangezogen wird.

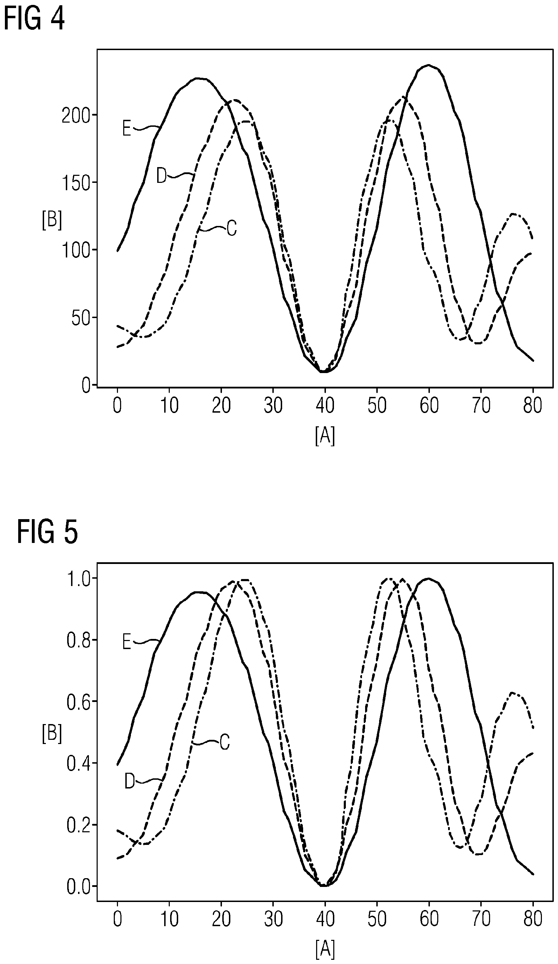

Zur Bestimmung des erfindungsgemäßen Arbeitspunktes des DIC mit Kamerabeobachtung gibt es verschiedene Möglichkeiten. FIG 4 zeigt die drei Darstellungen der FIG 1, 2 und 3 in einem Bild vereinigt.

Die drei dargestellten Kurven verlaufen bezüglich des Tiefpunktes ähnlich und weisen einen gemeinsamen Tiefpunkt in der Nähe von Schritt 40 auf. Ausgehend von diesem Tiefpunkt laufen die Kurven zunehmend auseinander in der relativen Phasenlage des sinusförmigen Verlaufs. Aufgrund der höheren Materialdispersion bei 455 nm (blau) verglichen mit grün (490 nm) und rot (680 nm), verläuft die Kurve für blau am steilsten bzw. mit der kürzesten Periode und die Kurve für rot mit der längsten Periode.

FIG 5 zeigt für eine bessere Vergleichbarkeit die Kurven aus FIG 4 in einer normierten Darstellung hinsichtlich der auf der Y-Achse aufgetragenen Hintergrundintensität ("Hintergrund-Intensität" B).

Vorteilhafterweise wird eine Einstellung des Sliders (Inkrement) so gewählt, dass für die kürzeste Wellenlänge und die längste Wellenlänge die Hintergrund-Intensität B sich noch möglichst zentriert im linearen Bereich bewegt. Vorteilhafterweise betragen die Messwellenlängen dabei z.B. 455 nm, 490 nm und 680 nm. Alternativ werden vorteilshafterweise spektrale Bänder für die Messung verwendet.

Im vorliegenden Beispiel in Figur 5 ist eine solche vorteilhafte Einstellung z.B. bei einer Slider-Position A im Bereich der Schritte 45 bis 48 bzw. 29 bis 33 gegeben.

Vorteilhafterweise werden für die genaue Wahl der Slider-Position A weitere Randbedingungen wie z.B. eine Gewichtung der Bedeutung der Messwellenlängen für eine Messung berücksichtigt und die Wahl der Position entsprechend vorgenommen.

Ohne weitere Randbedingungen wird bevorzugt eine Einstellung (Inkrement, da 500-fach kleiner als ein Schritt) gewählt, bei dem die mittleren Intensitäten für die betrachteten Farben in ihrer Spannbreite möglichst zentriert um den Mittelwert liegen oder die Spannbreite zwischen den Punkten der Wellenlängen möglichst minimiert ist. Die äußeren Wellenlängen genügen dabei bevorzugterweise einer zusätzlichen Randbedingung wie z.B., dass 20 % nicht unterschritten und 80 % nicht überschritten werden. Alternativ werden besonders bevorzugt z.B. 30 % nicht unterschritten und 70 % nicht überschritten.

Bevorzugt werden als alternatives Kriterium für die Einstellung für die jeweiligen Messwellenlängen oder Messwellenlängenbereiche die Positionen (Inkremente) der Einstellungen bestimmt. Der Mittelwert dieser beiden Inkrementwerte ergibt dann die Einstellposition für die jeweilige Wellenlänge. Im späteren Betrieb ist es dann vorteilshaferweise ausreichend, z.B. bei der Grundeinstellung des Gerätes beim Einschalten oder bei der Überprüfung oder Qualifizierung der Funktion lediglich die Position des Minimums zu bestimmen und von dort aus einen, z.B. in einer Gerätequalifikation oder Geräteabnahme vorbestimmten, fixen Wert eines Offsets in Inkrementen einzustellen.

Vorteilhafterweise kann bei der Abnahme so auch die Phasenverstellung pro Inkrement des Antriebs bestimmt werden, so dass auch später andere, optimierte Einstellungen ohne erneute Referenzierungsmessungen vorgenommen werden können.

Vorteilhafterweise ist ein erlaubter Phasenbereich für ein lineares Kontrastierungsverhalten und/oder ein im Wesentlichen symmetrisches Kontrastierungsverhalten aus den Referenzierungsmessungen bekannt, z.B. in der Form, dass die Phase z.B. im Bereich 20 bis 70 Grad oder 30 bis 60 Grad für alle bei der Messung verwendeten Wellenlängen liegen soll. Dieses Phasenkriterium wäre dann äquivalent zu einem Intensitätskriterium.

Vorteilhafterweise werden die Stellverhalten bzw. Grenzbereich zwischen Wellenlängenbereichen interpoliert. Dies hat den Vorteil, dass bei Referenzierungsmessungen der Charakterisierungsaufwand für das System begrenzt werden kann.

Vorteilhafterweise ist es alternativ möglich, chromatisch korrigierte Aufspaltungsprismen, z.B. im Sinne von low order oder zero order Verzögerungsplatten herzustellen, indem entweder die Dicke der Platten minimiert wird und/oder das Aufspaltungsprima, wie z.B. ein Wollaston- oder Nomarski-Prisma, aus mehr als zwei doppelbrechenden Materialstücken besteht, die so angeordnet sind, dass die chromatischen Effekte für den Stellwinkel des Polarisationselementes über einen vorbestimmten Wellenlängenbereich minimiert werden.

Vorteilhaft für die chromatische Korrektur ist eine Kombination aus Aufspaltungsprisma und Verzögerungsplatte. Bevorzugt wird eine Lambda-Halbe-Platte, auch als Lambda/2-Platte bezeichnet, bevorzugt in low order oder higher order Ausführung, mit passender Orientierung der Achsen z.B. vor dem Analysator in den Strahlengang eingefügt.

Vorteilhafterweise wird anstelle einer Schwarz/Weiss-Kamera eine Kombination einer Farbkamera und einer zugehörigen Farbauswertung eingesetzt. Dies hat den Vorteil, dass aus den chromatischen Eigenschaften des DIC Systems mehr Nutzen gezogen werden kann.

Vorteilhafterweise ist die Farbkamera im Bayer-Design ausgeführt oder, zur Beibehaltung einer optimierten Auflösung, als eine Mehrchip-Farbkamera ausgestaltet. Vorteilshafterweise umfasst die Kamera mindestens zwei getrennte Kameras für unterschiedliche Farbkanäle, wobei bevorzugt für jeden Farbkanal genaue eine oder mindestens eine Kamera vorgesehen ist.

Vorteilshafterweise wird die beispielshaft in Figur 5 dargestellte Normierung für den jeweiligen Farbkanal z.B. mittels der Intensitätseinstellung der Lichtquelle und/oder über die Kameraeinstellung für z.B. den Gain und/oder die Belichtungszeit vorgenommen. Vorteilshafterweise wird alternativ für die Farbkanäle ein mittels der Gerätereferenzierung vorbestimmter Skalierungsfaktor verwendet.

Vorteilhafterweise werden alternativ die Farbkanäle mit einer Schwarz/Weiss-Kamera seriell aufgenommen und es werden spezifische Betriebsparameter für wenigstens einen aus einer Mehrzahl von Farbkanälen angewendet, bevorzugt für jeden der Farbkanäle.

### Bezugszeichenliste

- A: Slider-Position
- B: Hintergrund-Intensität
- C: zentrale Messwellenlänge 455 nm
- D: zentrale Messwellenlänge 490 nm
- E: zentrale Messwellenlänge 680 nm

## Patentansprüche

1. Verfahren zum Abbilden eines Messobjekts mit einer Kamera in einem Objektbereich eines Mikroskops mittels Differenzialinterferenzkontrast, das Mikroskop umfassend eine Beleuchtungsvorrichtung zur Beleuchtung des Messobjektes, polarisationsoptische Komponenten zur Realisierung des Differenzialinterferenzkontrasts und die Kamera zur Abbildung eines Bildes des Messobjektes in Differenzialinterferenzkontrast, wobei die polarisationsoptischen Komponenten in der Grundeinstellung eines Stellwinkels so eingestellt sind, dass die Bildhelligkeit in einem Bereich des Objektbereichs, in dem sich kein Messobjekt befindet, mindesten 20 % und höchstens 80 % der maximalen Bildhelligkeit eines Messobjektes im Objektbereich beträgt, die durch Verstellung des Stellwinkels der polarisationsoptischen Komponenten erzielt werden kann.

2. Verfahren nach Anspruch 1, wobei die Bildhelligkeit im Bereich des Objektbereichs, in dem sich kein Messobjekt befindet, mindesten 30 % und höchstens 70 % der maximalen Bildhelligkeit eines Messobjektes im Objektbereich beträgt.

3. Verfahren nach Anspruch 2, wobei die Bildhelligkeit im Bereich des Objektbereichs, in dem sich kein Messobjekt befindet, mindesten 40 % und höchstens 60 %, bevorzugt 50 % der maximalen Bildhelligkeit eines Messobjektes im Objektbereich beträgt.

4. Verfahren nach einem der Ansprüche 1 bis 3, wobei die polarisationsoptischen Komponenten mindestens einen Polarisator, einen Polarisationsanalysator und/oder ein Wollaston-Prisma, bevorzugt zwei Wollaston-Prismen umfasst.

5. Verfahren nach einem der vorhergehenden Ansprüche, wobei die chromatischen Effekte der polarisationsoptischen Komponenten für deren Stellwinkel in der Grundeinstellung für einen vorbestimmten Messwellenlängenbereich minimiert sind.

6. Verfahren nach einem der vorhergehenden Ansprüche, wobei die Beleuchtungsvorrichtung Licht in einem vorbestimmten Messwellenlängenbereich emittiert, der Messwellenlängenbereich bevorzugt umfassend die Wellenlängen 455 nm, 490 nm und/oder 680 nm.

7. Verfahren nach Anspruch 6, wobei die Bildhelligkeit im Bereich des Objektbereichs, in dem sich kein Messobjekt befindet, auf eine mittlere Wellenlänge des Messwellenlängenbereichs bezieht.

8. Verfahren nach Anspruch 6, wobei die mittlere Wellenlänge einem gewichteten Mittelwert von Wellenlängen des Messwellenlängenbereich entspricht, wobei bevorzugt Gewichtungen gewählt werden, die der Bedeutung der jeweiligen Messwellenläge für die vorzunehmende Abbildung entsprechen.

9. Verfahren nach einem der vorhergehenden Ansprüche, wobei die Kamera als eine Schwarzweiß-Kamera und/oder eine Farbkamera ausgebildet ist.

10. Verfahren nach Anspruch 9, wobei die Farbkamera im Bayer-Design oder als eine Mehrchip-Farbkamera ausgeführt ist, ober anstelle einer Farbkamera getrennte Farbkameras für unterschiedliche Farbkanäle vorgesehen sind.

11. Verfahren nach einem der vorhergehenden Ansprüche, wobei das Messobjekt eine biologische Zelle, bevorzugt eine Blutzelle, Urinsedimente und/oder ein medizinisches Präparat umfasst, wobei das Messobjekt bevorzugt vor Durchführung des Verfahrens einem Menschen oder einem Tier entnommen worden ist und/oder bereitgestellt worden ist.

12. Automatisches Analysegerät umfassend ein Mikroskop zum Abbilden eines Messobjekts mit einer Kamera in einem Objektbereich des Mikroskops mittels Differenzialinterferenzkontrast, das Mikroskop umfassend eine Beleuchtungsvorrichtung zur Beleuchtung des Messobjektes, polarisationsoptische Komponenten zur Realisierung des Differenzialinterferenzkontrasts und die Kamera zur Abbildung eines Bildes des Messobjektes in Differenzialinterferenzkontrast, das automatische Analysegerät weiter umfassend eine programmierbare Steuerungsvorrichtung, wobei die Steuerungsvorrichtung so konfiguriert ist, dass das automatische Analysegerät ein Verfahren nach einem der Ansprüche 1 bis 11 ausführen kann.

13. Automatisches Analysegerät nach Anspruch 12, wobei das automatische Analysegerät einen automatischen Hämatologie-Analyzer umfasst oder als ein automatischer Hämatologie-Analyzer ausgestaltet ist.

14. Verwendung eines Verfahrens nach einem der Ansprüche 1 bis 11 in einem automatischem Analysegerät, bevorzugt in einem automatischen Analysegerät nach einem der Ansprüche 12 oder 13.
